# EUROPEAN PATENT APPLICATION

(11) **EP 4 289 531 A1**
(43) Date of publication of application: **13.12.2023**
(21) Application number: 22382560.5
(22) Date of filing: 10.06.2022
(51) Int. Cl.: B23B 29/02, B23B 27/00, B23C 5/00

(54) **VIBRATION DAMPING SYSTEM OF A BORING BAR**

(71) Applicant: Ideko, S.Coop., 20870 Elgoibar Guipuzcoa (ES)
(72) Inventor: ASTARLOA BADIOLA, ASIER, 20870 ELGOIBAR (GUIPUZCOA) (ES); MANCISIDOR AIZPURUA, IKER, 20870 ELGOIBAR (GUIPUZCOA) (ES); PEÑA BARRIO, JOSU, 20870 ELGOIBAR (GUIPUZCOA) (ES); MUÑOA GOROSTIDI, JOKIN, 20870 ELGOIBAR (GUIPUZCOA) (ES)
(74) Representative: Plasseraud IP

(57) **Abstract**

The present invention relates to a vibration damping system for a boring bar (1) to which a boring tool (2) is attached, which comprises a longitudinal movable mass (3) that can be coupled and guided in an inner longitudinal housing (4) of the bar (1) by means of elastic elements, comprising at least two elastic elements (5) for supporting and guiding the movable mass (3), so as to allow the oscillation of the movable mass (3) perpendicularly to the longitudinal direction of the bar (1) damping said bar (1) according to a radial vibration mode when the vibration of the tool (2) occurs during boring, wherein the movable mass has its centre of gravity (6) displaced with respect to the average distance between said elastic elements (5) for supporting the movable mass (3), allowing both a radial and rotational oscillatory movement that allows the damping of vibrations both by means of a radial vibration mode as well as a rotational one.

## Description

### Technical field

The present invention relates to the suppression or attenuation of vibrations that appear during machining known as "chatter", especially in boring operations wherein the tool is slender. Specifically, vibration damping solutions that use passive damping solutions in which a vibration damping system based on a movable mass tuned to the vibration frequency is integrated inside the boring bar.

### State of the art

In recent years, the machine tool sector has tended to evolve towards solutions that allow greater productivity, improve the quality of the parts obtained and save costs. In this sense, the attenuation, or suppression, of the vibrations that arise during machining is particularly relevant.

The mechanical structures of machine tools tend to vibrate during machining, and vibrations may appear which, due to their nature, can be detrimental to the surface quality of the machined part and to the integrity of the components of the machine itself, which furthermore can cause premature tool wear or even breakage. These vibrations are more pronounced in boring operations, wherein the use of generally slender boring bars is necessary, these bars being prone to greater flexibility due to their low dynamic stiffness, and therefore prone to resulting in said vibrations of the tool.

The suppression of vibrations in the tool involves increasing the dynamic stiffness of the same. The main geometric parameters of the tool are set by the hole to be machined, and the topological optimisation of the shape of the boring bar cannot provide important improvements. Therefore, technical solutions must be implemented in the tool or in the tool holder.

With regard to the tool, the most widespread solution in the industry is the integration of tuned mass dampers (TMD), next to the tip of the tool, which increases the dynamic stiffness of the tool. These dampers are of the so-called passive dampers since they are tuned by taking into account the dynamic parameters of each bar and they operate without external action, in other words, without a control system. The method consists of a mass suspended between rubber bands inside the bar, generating a movement in the direction perpendicular to the bar (radial direction) which begins to oscillate to dampen the vibrations (chatter) produced in the boring tool. This is achieved by tuning the frequency of the damper to a frequency close to the vibration frequency of the bending mode of the bar, thus attenuating the aforementioned chatter. Although this solution is effective in suppressing vibrations, it has some drawbacks:
- Since the damper must be designed for each tool, a significant monetary investment is required to equip a workshop with anti-vibration tools of different diameters and lengths.
- In the event of a collision, the cost of a new tool is higher than that of conventional tools.
- Since the dampers are based on elastic elements (elastomers), their use in operations without a coolant is restricted due to the maximum service temperature of these materials.

With regard to the latter, the problem lies in the fact that the mechanical properties of the rubber band do not behave in a linear manner with the change in temperature. When heat is generated during the metal cutting process, the temperature of the tool increases. This temperature variation modifies the Young's modulus and the loss factor of the elastomers, negatively affecting the tuning of the movable mass located inside the boring bar.

To overcome these problems, there are solutions in which damping elements of a substantially cylindrical shape are used, and which use a damping fluid to compensate for the effects of temperature. However, solutions of this type are more expensive and difficult to implement, in addition to having little versatility.

Moreover, to obtain a more effective and robust solution to the variations in frequency of the bending mode of the bar, a damper mass value that is as high as possible is required, aiming to maximise the ratio of this mass to the modal mass of the bending mode of the bar. Currently, the density of the damping bodies used is already among the highest available. Therefore, to increase the mass it is necessary to increase the volume of the damping body, which entails problems of space and weakens the construction where it is to be placed.

### Object of the invention

In order to provide a technical solution for boring bars that is as efficient and robust as possible and to solve the technical problems discussed so far, in addition to providing additional advantages that can be derived later, the present invention provides a vibration damping system for a boring bar to which a boring tool is attached, which comprises a longitudinal movable mass that can be coupled and guided in an inner longitudinal housing of the bar close to the tool, by means of elastic elements, comprising at least two elastic elements for supporting and guiding of the movable mass, so as to allow the oscillation of the movable mass perpendicularly to the longitudinal direction of the bar, damping said bar according to a translational radial vibration mode when the vibration of the tool occurs during boring, wherein the movable mass has its centre of gravity displaced with respect to the average distance between said elastic elements for supporting and guiding the movable mass, allowing both a radial and rotational oscillatory movement that allows the damping of vibrations both by means of a radial vibration mode as well as a rotational one. The use of two vibration modes in the tuning of the damper notably increases the effectiveness and robustness of the damper, avoiding the use of fluids and high damping masses.

It should be understood that the aforementioned vibration damping system, through the use of two vibration modes (radial and rotational) for tuning, as well as for a boring bar, could be equally applicable in tool holders, machine elements and work pieces in machine tools, and other objects exposed to unwanted vibrations during machining.

Longitudinal housing is understood as the housing arranged in the axial direction or larger dimension of the boring bar. Said longitudinal housing of the bar being configured to house the movable mass and the elastic elements.

Preferably, the longitudinal dimension of the movable mass (in the axial direction of the bar) will be greater than its transverse dimension.

Preferably, this damping system will be placed as close as possible to the tool in order to achieve more effective damping.

According to a design option, the movable mass has a cylindrical configuration, the elastic elements preferably being in the shape of rings.

This damping system is of the so-called passive damper systems since it begins its vibration and subsequent damping due to the effect of the vibrations produced in the boring bar, without any external action as is the case with active dampers in which the inertial mass of the damper is dynamically controlled.

To achieve an efficient effect, the inertial mass of the actuator must be tuned to a frequency close to the frequency of the bending mode of the bar. However, this tuning can undergo variations due to problems such as the change in temperature of the elastic elements supporting the movable mass. When heat is generated during the machining process, the temperature of the tool increases, which can consequently affect the behaviour of the elastic elements. An increase in the temperature thereof could lead to a decrease in stiffness such that the frequency of the vibration mode of the movable mass is out of tune with the vibration frequency of the bar. By taking into account the rotational mode of the movable mass of the actuator, two alternatives can be pursued. The first is the combination of both the radial and rotational modes of the actuator which results in greater damping of the bending frequency of the bar.

The second alternative is tuning the elastic elements so that the rotational vibration mode has a frequency substantially higher than the radial vibration mode of the movable mass, for example, by tuning the radial mode with respect to the bending frequency of the bar at ambient temperature and the rotational mode at the highest service temperature. In this way, the entire operating temperature range of the boring bar can be covered.

Taking into account the rotational mode is achieved by displacing the centre of gravity with respect to the midpoint between supports of the elastic elements. A rotational moment of inertia is then produced which allows for relative tuning of the rotational mode with respect to the radial mode of the inertial mass of the damper.

With all of this, non-linearities in the damping are avoided by controlling the attenuation of vibrations in the most effective manner once the operating conditions of the boring bar are known.

Moreover, this solution can be valid for any type of tool supporting bars used in machine tools, due to its ease of implementation in a housing shaped for this purpose to house the damping system object of the invention.

Preferably, to displace the centre of gravity of the movable mass with respect to the midpoint of the end supports of said movable mass, the movable mass is made of at least two materials of different densities.

According to another alternative of the invention, to displace the centre of gravity of the movable mass, said movable mass is made of at least two sections of different diameter. The different section diameters could be applied to a movable mass of homogeneous material or to a movable mass with at least two materials of different densities.

According to another alternative of the invention, to displace the centre of gravity of the movable mass, said movable mass is made of a cantilever protruding from the support of the end located furthest from the tool. This cantilever may have the same or different diameter with respect to the movable mass located between supports.

According to another aspect of the invention, it is envisaged that there is an additional intermediate elastic element, aligned with the displaced centre of gravity of the movable mass. Thanks to this configuration, the dynamic properties of the radial mode of the movable mass are better controlled, without this arrangement affecting the stiffness of the rotational vibration mode.

According to another feature of the invention, the damping system comprises at least one preload washer for preloading the elastic elements. This configuration facilitates the tuning of the elastic elements in relation to the bending frequency of the boring bar, thus doubling the effectiveness.

It is envisaged that the movable mass of the damping system object of the invention comprises an inner through hole. This hole is configured to allow passage of the coolant liquid (for example, cutting fluid) in the machining process, in addition to the necessary wiring, so that while it allows vibration damping, it leaves room for installations of this type, it being preferable that they circulate inside the boring bar.

### Description of the figures

Figure 1 shows a schematic longitudinal sectional view of a boring bar comprising a vibration damping system object of the invention.
Figure 2 shows an exploded perspective view of the elements forming part of the vibration damping system object of the invention.
Figure 3 shows a sectional view of the vibration damping movable mass together with the elastic elements at the end thereof for a movable mass with two materials of different densities.
Figure 4 shows a cross-sectional view of a movable mass like the one in Figure 3, but with an intermediate elastic element aligned with the centre of gravity of the movable mass.
Figure 5 shows a cross-sectional view of a movable mass of homogeneous material and with a cantilevered extension.
Figure 6 shows a cross-sectional view of a movable mass with two materials and with a cantilevered extension.
Figure 7 shows a cross-sectional view of a movable mass like that of Figure 6, but with an intermediate elastic element.

### Detailed description of the invention

In light of the aforementioned figures, and in accordance with the adopted numbering, one may observe therein a preferred exemplary embodiment of the invention and design alternatives, which comprise the parts and elements indicated and described in detail below.

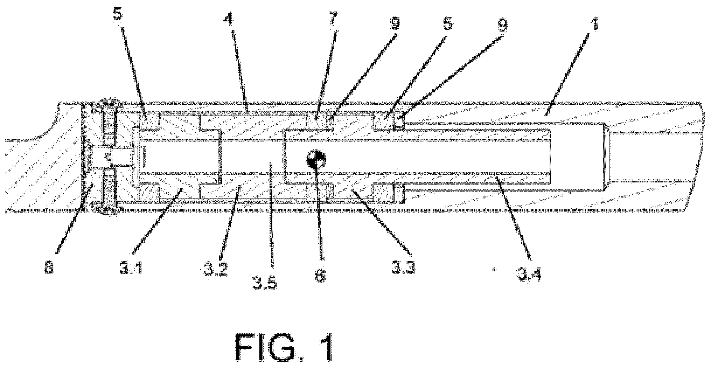

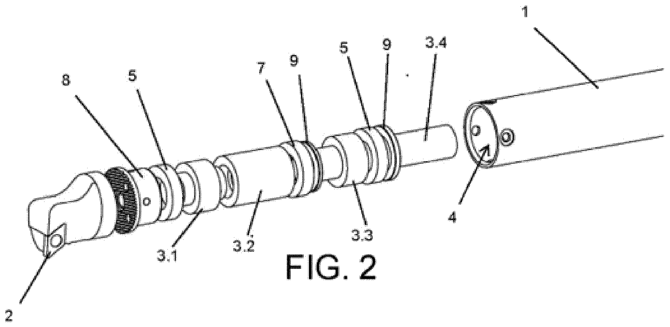

As can be seen in Figures 1 and 2, there is a boring bar (1) in which the vibration damping system has been incorporated. In this way, the system object of the invention comprises an inner longitudinal housing (4) of the bar (1), in which a movable mass (3) is installed which is attached in the inner longitudinal housing (4) by means of at least two elastic elements (5) at the ends of the movable mass (3) that act as a support against the boring bar (1). These elastic support elements (5) are the same or similar to those used in the state of the art, some examples of the elastomers used being, for example, polyurethane-based elastomers, NBR, rubbers, etc., such that they allow the oscillation of the movable mass (3) in the direction perpendicular to the longitudinal axis of the bar (1). This vibration makes it possible to dampen the vibrations produced during machining by the effect of the bending of the bar (1) according to a radial vibration mode of the movable mass.

To do so, the elastic elements (5) are tuned so that their vibration mode is close to the bending frequency of the bar (1).

During installation, these elastic elements (5) are preloaded, for example, with the preload washers (9) that can be seen in Figures 1 and 2. In this way, the movable mass (3) is inserted into the housing (4) with the elastic elements (5) and the preload washers (9), pressing and holding the assembly with the adapter (8) in place, which will also serve for coupling the tool (2). Both the inner housing (4) and the movable mass (3) will preferably have a cylindrical configuration, just like the corresponding elastic elements (5) will have a ringshaped configuration.

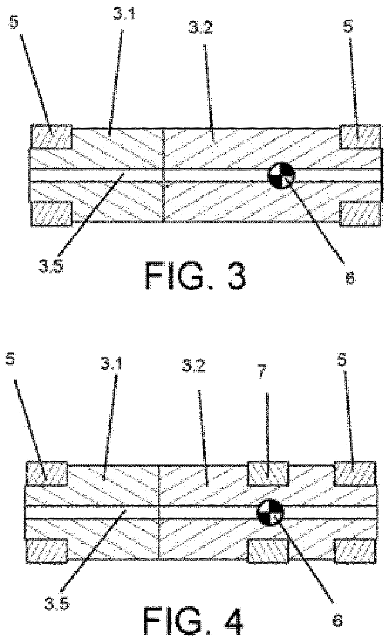

However, to gain damping efficiency on the vibration of the bar or to counteract the effects of high machining temperatures on the elastic elements (5), the present invention contemplates displacing the centre of gravity (6) of the movable mass (3) as can be seen in Figures 3 to 7, wherein the centre of gravity (6) is represented by a circle.

This displacement of the centre of gravity (6) with respect to the average distance between the elastic elements (5) located at the ends of the movable mass (3) causes a moment of inertia that makes it possible to tune a second mode related to the rotation of the movable mass (3) relative to the radial mode, so that the two vibration modes of the movable mass can be placed at the frequencies of interest.

To displace the centre of gravity (6) of the movable mass (3) according to a practical embodiment, said movable mass (3) is made of two materials of different densities, resulting in two half-bodies (3.1, 3.2) of different densities as can be seen in Figure 3. These half-bodies can be made in a single piece or in two or more pieces that will be joined later, for example, by fitting as can be seen in Figures 1 and 2. Examples of the materials used are steel, aluminium, copper or tungsten carbide, among others.

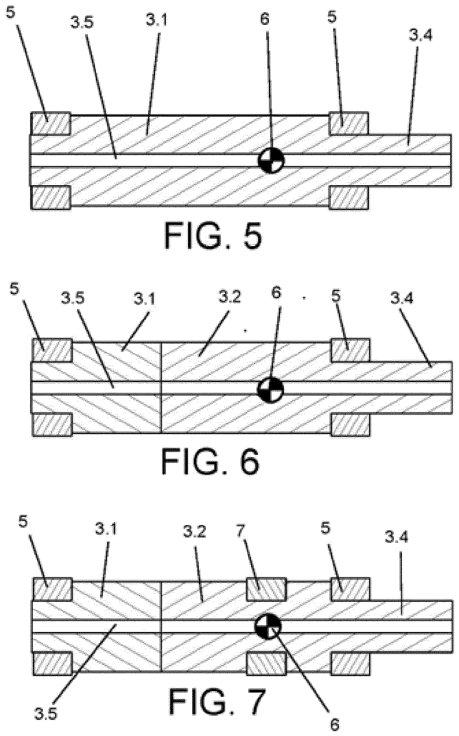

According to another exemplary embodiment as shown in Figure 5, said movable mass (3) is made of a homogeneous material, but it has a cantilevered extension (3.4) on this occasion with a smaller diameter than the rest of the movable mass (3).

According to another design alternative like the one shown in Figure 6, the movable mass (3) is made of a combination of the preceding embodiments, in other words, with at least two materials of different densities and with a smaller diameter section, or cantilevered extension.

Moreover, for greater control in the adjustment of the radial vibration mode, as can be seen in Figures 4 and 7, it is envisaged that there is an intermediate elastic element (7) between the elastic elements (5) at the ends. This intermediate elastic element (7) is aligned with the displaced centre of gravity (6), so that said adjustment influences the radial vibration mode of the movable mass (3) without affecting the rotational mode of the same. This allows for a more precise adjustment by having a greater range of parameters.

Thus, in the tuning process of the damping system, two degrees of freedom are available instead of just one as in the known state of the art.

According to a tuning process of the system, the system is tuned around the conflicting bending frequency of the bar (1) to compensate for the effect of temperature, for example, by tuning the radial mode at ambient temperature and the rotational mode at a service temperature higher than said ambient temperature. In this way, the entire operating temperature range of the bar can be covered.

According to another design option, the damping system is tuned, tuning both radial and rotational modes near the conflicting bending frequency of the bar. In this way, the efficiency of the damper is improved by doubling its effectiveness.

## Claims

1. A vibration damping system for a boring bar (1) to which a boring tool (2) is attached, which comprises a longitudinal movable mass (3) that can be coupled and guided in an inner longitudinal housing (4) of the bar (1) by means of elastic elements, comprising at least two elastic elements (5) for supporting and guiding the movable mass (3), so as to allow the oscillation of the movable mass (3) perpendicularly to the longitudinal direction of the bar (1) damping said bar (1) according to a radial vibration mode when the vibration of the tool (2) occurs during boring, **characterised in that** the movable mass has its centre of gravity (6) displaced with respect to the average distance between said elastic elements (5) for supporting the movable mass (3), allowing both a radial and rotational oscillatory movement that allows the damping of vibrations both by means of a radial vibration mode as well as a rotational one.

2. The vibration damping system according to the preceding claim, **characterised in that** to displace the centre of gravity (6) of the movable mass (3), said movable mass (3) is made of at least two materials of different densities.

3. The vibration damping system according to claim 1 or 2, **characterised in that** to displace the centre of gravity (6) of the movable mass (3), said movable mass (3) is made of at least two sections of different diameter.

4. The vibration damping system according to any one of the preceding claims, **characterised in that** to displace the centre of gravity (6) of the movable mass (3), a cantilevered extension (3.4) is arranged at the end of the movable mass (3) opposite the tool (2).

5. The vibration damping system according to any one of the preceding claims, **characterised in that** it comprises an intermediate elastic element (7) aligned with the centre of gravity (6) of the movable mass (3).

6. The vibration damping system according to any one of the preceding claims, **characterised in that** it comprises at least one preload washer (9) for preloading the elastic elements (5, 7).

7. The vibration damping system according to any one of the preceding claims, **characterised in that** the movable mass (3) comprises an inner through hole (3.5).

8. The vibration damping system according to any one of the preceding claims, **characterised in that** the elastic elements (5) are configured so that the radial vibration mode and the rotational vibration mode of the movable mass (3) have the same damping frequency.

9. The vibration damping system according to any one of the preceding claims, **characterised in that** the elastic elements (5) are configured so that the radial vibration mode has a first damping frequency at a predetermined temperature and the rotational vibration mode has a second damping frequency at a temperature higher than the predetermined temperature.
